# EUROPEAN PATENT APPLICATION

(11) **EP 4 818 223 A1**
(43) Date of publication of application: **07.10.2026**
(21) Application number: 24897025.3
(22) Date of filing: 30.08.2024
(51) Int. Cl.: C08G 18/40, C08G 18/42, C08G 18/48, C08G 18/65, C08G 18/69

(54) **COPOLYMER, AND METHOD FOR MANUFACTURING COPOLYMER**

(30) Priority: 29.11.2023 JP 2023201844
(71) Applicant: BRIDGESTONE CORPORATION, Chuo-ku Tokyo 104-8340 (JP)
(72) Inventor: TARDIF Olivier, Tokyo 104-8340 (JP); HAMATANI Satoshi, Tokyo 104-8340 (JP)
(74) Representative: Marks & Clerk LLP
(86) International application number: PCT/JP2024/031316
(87) International publication number: WO 2025/115334

(57) **Abstract**

With the aim of providing a polymer that can be utilized as a tire material and is easily decomposable, a copolymer includes a segment (A) derived from a butadiene-based polymer, a segment (B) derived from a biodegradable polyester, a segment (C) derived from a polyethylene glycol, and a segment (D) derived from a polyisocyanate compound. The copolymer preferably further includes a segment (E) derived from a diol compound having a molecular weight of 600 or less, other than the segment (A) derived from a butadiene-based polymer, the segment (B) derived from a biodegradable polyester, the segment (C) derived from a polyethylene glycol, and the segment (D) derived from a polyisocyanate compound.

## Description

### TECHNICAL FIELD

The present disclosure relates to a copolymer and a method for producing a copolymer.

### BACKGROUND

Butadiene-based polymers such as butadiene rubber and styrene-butadiene rubber, which are used mainly for tire applications in the rubber industry, are generally difficult to decompose. Therefore, for example, it has been pointed out that tire wear dust and the like may exist in the natural environment as microplastics, thereby posing a risk of environmental burden.

On the other hand, among chemically synthesized polymers, polycaprolactone and the like are known as biodegradable polymers that are easily decomposed in the natural environment. For example, JP 2023-58335 A (PTL 1) discloses a branched biodegradable polyester having a block structure comprising a random copolymer segment of lactide and caprolactone and a homopolymer segment of lactide, with a polyhydric alcohol having a valency of 3 or more bonded to the terminal of the block structure.

### CITATION LIST

### (Patent Literature)

PTL 1: JP 2023-58335 A

### SUMMARY

### (Technical Problem)

However, the branched biodegradable polyester disclosed in PTL 1 does not have the physical properties required for tire applications. Therefore, there is a demand for a polymer that can be utilized as a tire material and is also easily decomposable.

Accordingly, the present disclosure aims to solve the above-described problems of the prior art and provides a polymer that can be utilized as a tire material and is also easily decomposable.

Further, the present disclosure also aims to provide a method for producing a polymer that can be utilized as a tire material and is also easily decomposable.

### (Solution to Problem)

The gist configuration of the copolymer and the method for producing a copolymer of the present disclosure for solving the above problems is as follows.
[1] A copolymer comprising: a segment (A) derived from a butadiene-based polymer; a segment (B) derived from a biodegradable polyester; a segment (C) derived from a polyethylene glycol; and a segment (D) derived from a polyisocyanate compound.
[2] The copolymer according to [1], further comprising a segment (E) derived from a diol compound having a molecular weight of 600 or less, other than the segment (A) derived from a butadiene-based polymer, the segment (B) derived from a biodegradable polyester, the segment (C) derived from a polyethylene glycol, and the segment (D) derived from a polyisocyanate compound.
[3] The copolymer according to [1] or [2], wherein, in a total amount of the segment (A) derived from a butadiene-based polymer, the segment (B) derived from a biodegradable polyester, and the segment (C) derived from a polyethylene glycol, a proportion of the segment (A) derived from a butadiene-based polymer is 20 mass% to 80 mass%, a proportion of the segment (B) derived from a biodegradable polyester is 10 mass% to 40 mass%, and a proportion of the segment (C) derived from a polyethylene glycol is 10 mass% to 40 mass%.
[4] The copolymer according to any one of [1] to [3], wherein, in the total amount of the segment (A) derived from a butadiene-based polymer, the segment (B) derived from a biodegradable polyester, and the segment (C) derived from a polyethylene glycol, the proportion of the segment (A) derived from a butadiene-based polymer is 20 mass% to 60 mass%, the proportion of the segment (B) derived from a biodegradable polyester is 20 mass% to 40 mass%, and the proportion of the segment (C) derived from a polyethylene glycol is 20 mass% to 40 mass%.
[5] The copolymer according to any one of [1] to [4], wherein a molar ratio (NCO/OH) of isocyanate groups (NCO) to hydroxy groups (OH) in raw materials of the copolymer is not less than 0.8 and less than 1.0.
[6] The copolymer according to any one of [2] to [5], wherein a mass ratio (SS:HS) of a soft segment (SS) comprising the segment (A) derived from a butadiene-based polymer, the segment (B) derived from a biodegradable polyester, and the segment (C) derived from a polyethylene glycol, to a hard segment (HS) comprising the segment (D) derived from a polyisocyanate compound and the segment (E) derived from a diol compound having a molecular weight of 600 or less, is from 80:20 to 50:50.
[7] The copolymer according to any one of [1] to [6], wherein a number-average molecular weight (Mn) of a butadiene-based polymer (A') serving as a raw material for the segment (A) derived from a butadiene-based polymer is from 1,000 to 30,000.
[8] A method for producing the copolymer according to any one of [2] to [7], comprising:
   a step of reacting a butadiene-based polymer (A'), a biodegradable polyester (B'), a polyethylene glycol (C'), and a polyisocyanate compound (D') to form a soft segment (SS) containing portion; and
   a step of reacting a diol compound (E') having a molecular weight of 600 or less, other than the butadiene-based polymer (A'), the biodegradable polyester (B'), the polyethylene glycol (C'), and the polyisocyanate compound (D'), with the soft segment (SS) containing portion to produce a copolymer.

### (Advantageous Effect)

According to the present disclosure, it is possible to provide a copolymer that can be utilized as a tire material and is also easily decomposable.

Further, according to the present disclosure, it is possible to provide a method for producing a copolymer that can be utilized as a tire material and is also easily decomposable.

### DETAILED DESCRIPTION

Hereinafter, the copolymer of the present disclosure and the method for producing the copolymer will be illustratively described in detail based on embodiments thereof.

### <Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

### <Copolymer>

The copolymer of the present embodiment is characterized by comprising a segment (A) derived from a butadiene-based polymer, a segment (B) derived from a biodegradable polyester, a segment (C) derived from a polyethylene glycol, and a segment (D) derived from a polyisocyanate compound.

The copolymer of the present embodiment contains a segment (A) derived from a butadiene-based polymer, and the segment (A) derived from a butadiene-based polymer imparts sufficient rubber elasticity to the copolymer as a tire material.

Further, the copolymer of the present embodiment contains a segment (B) derived from a biodegradable polyester, and the segment (B) derived from a biodegradable polyester serves as a decomposable portion (hydrolyzable portion) of the copolymer.

Furthermore, the copolymer of the present embodiment contains a segment (C) derived from a polyethylene glycol, and the segment (C) derived from a polyethylene glycol imparts hydrophilicity to the copolymer. Here, a copolymer having the segment (A) derived from a butadiene-based polymer and the segment (B) derived from a biodegradable polyester, but not having the segment (C) derived from a polyethylene glycol, although having the segment (B) derived from a biodegradable polyester as a decomposable portion, is hydrophobic, and water necessary for hydrolysis of the segment (B) derived from a biodegradable polyester is less likely to reach the segment (B) derived from a biodegradable polyester, so the rate of the hydrolysis reaction is slow and decomposition is difficult. In contrast, the copolymer of the present embodiment, in addition to the segment (A) derived from a butadiene-based polymer and the segment (B) derived from a biodegradable polyester, has the segment (C) derived from a polyethylene glycol and is highly hydrophilic, so water easily reaches the segment (B) derived from a biodegradable polyester, the rate of the hydrolysis reaction is fast, and decomposition is easy.

Moreover, the copolymer of the present embodiment contains a segment (D) derived from a polyisocyanate compound, and by bonding the segment (A) derived from a butadiene-based polymer, the segment (B) derived from a biodegradable polyester, and the segment (C) derived from a polyethylene glycol, imparts sufficient physical properties to the copolymer as a tire material.

Accordingly, the copolymer of the present embodiment can be utilized as a tire material and is easily decomposable, particularly in the natural environment.

### - Segment (A) Derived from Butadiene-Based Polymer -

The copolymer of the present embodiment contains a segment (A) derived from a butadiene-based polymer, and the segment (A) derived from a butadiene-based polymer imparts sufficient rubber elasticity to the copolymer as a tire material.

The segment (A) derived from a butadiene-based polymer is derived from a butadiene-based polymer (A') as a raw material. The butadiene-based polymer (A') contains a 1,3-butadiene unit and may be a homopolymer of 1,3-butadiene or a copolymer of 1,3-butadiene and another monomer copolymerizable with 1,3-butadiene. Here, examples of other monomers copolymerizable with 1,3-butadiene include conjugated diene monomers other than 1,3-butadiene and aromatic vinyl monomers. Examples of conjugated diene monomers other than 1,3-butadiene include 2-methyl-1,3-butadiene (also referred to as "isoprene"), 2,3-dimethyl-1,3-butadiene, 1,3-pentadiene, 1,3-hexadiene, and the like. Examples of the aromatic vinyl monomer include styrene, p-methylstyrene, α-methylstyrene, vinyl naphthalene, and the like. Specific examples of the butadiene-based polymer (A') include polybutadiene (also referred to as "butadiene rubber") and styrene-butadiene copolymer (also referred to as "styrene-butadiene rubber"), which are preferred. These butadiene-based polymers (A') may be used alone or in combination of two or more.

The butadiene-based polymer (A') serving as a raw material for the segment (A) derived from a butadiene-based polymer preferably has a plurality of hydroxy groups (OH), more preferably has two hydroxy groups (OH) (i.e., is a so-called diol), and particularly preferably has hydroxy groups (OH) at both ends (i.e., is a so-called both terminals diol). When the raw material butadiene-based polymer (A') has a plurality of hydroxy groups (OH), it is easier to bond with other segments (B) and (C) using the polyisocyanate compound (D') serving as a raw material for the segment (D) derived from a polyisocyanate compound, which will be described later, and production becomes easier. Specific examples of butadiene-based polymers having a plurality of hydroxy groups include polybutadiene diol and the like.

The butadiene-based polymer (A') serving as a raw material for the segment (A) derived from a butadiene-based polymer preferably has a number-average molecular weight (Mn) of 1,000 to 30,000. When the number-average molecular weight (Mn) of the butadiene-based polymer (A') is 1,000 or more, the copolymer has more preferable rubber elasticity as a tire material, and when the number-average molecular weight (Mn) of the butadiene-based polymer (A') is 30,000 or less, the decomposition product containing the segment (A) derived from a butadiene-based polymer generated after decomposition of the copolymer becomes sufficiently small, reducing the environmental burden. Therefore, a copolymer in which the butadiene-based polymer (A') serving as a raw material for the segment (A) derived from a butadiene-based polymer has a number-average molecular weight (Mn) of 1,000 to 30,000 has more preferable rubber elasticity and a lower environmental burden.

From the viewpoint of reducing environmental burden, the number-average molecular weight (Mn) of the butadiene-based polymer (A') is more preferably 20,000 or less, still more preferably 10,000 or less, and particularly preferably 5,000 or less.

### - Segment (B) Derived from Biodegradable Polyester -

The copolymer of the present embodiment contains a segment (B) derived from a biodegradable polyester, and the segment (B) derived from a biodegradable polyester serves as a decomposable portion (hydrolyzable portion) of the copolymer. The segment (B) derived from a biodegradable polyester and a biodegradable polyester (B') serving as a raw material for the segment (B) derived from a biodegradable polyester are biodegradable. Here, "biodegradation" means that a substance is decomposed into carbon dioxide, water, and the like by the action of microorganisms.

As the biodegradable polyester (B') serving as a raw material for the segment (B) derived from a biodegradable polyester, various polyesters having biodegradability can be adopted, and among them, polylactones are preferred. Examples of such polylactones include polybutyrolactone, polyvalerolactone, polycaprolactone, polydecalactone, and the like. Among these polylactones, polycaprolactone is particularly preferred from the viewpoint of degradability. These biodegradable polyesters (B') may be used alone or in combination of two or more.

The biodegradable polyester (B') serving as a raw material for the segment (B) derived from a biodegradable polyester preferably has a plurality of hydroxy groups (OH), more preferably has two hydroxy groups (OH) (i.e., is a so-called diol), and particularly preferably has hydroxy groups (OH) at both ends (i.e., is a so-called both terminals diol). When the raw material biodegradable polyester (B') has a plurality of hydroxy groups (OH), it is easier to bond with other segments (A) and (C) using the polyisocyanate compound (D') serving as a raw material for the segment (D) derived from a polyisocyanate compound, which will be described later, and production becomes easier. Specific examples of biodegradable polyesters having a plurality of hydroxy groups include polybutyrolactone diol, polyvalerolactone diol, polycaprolactone diol, polydecalactone diol, and the like, among which polycaprolactone diol is preferred.

The molecular weight of the biodegradable polyester (B') serving as a raw material for the segment (B) derived from a biodegradable polyester is not particularly limited. In one embodiment, the biodegradable polyester (B') preferably has a number-average molecular weight (Mn) of 200 to 20,000.

### - Segment (C) Derived from Polyethylene Glycol -

The copolymer of the present embodiment contains a segment (C) derived from a polyethylene glycol, and the segment (C) derived from a polyethylene glycol imparts hydrophilicity to the copolymer. The polyethylene glycol (C') serving as a raw material for the segment (C) derived from a polyethylene glycol is not particularly limited. Polyethylene glycol (C') usually has hydroxy groups (OH) at both ends, so it is easier to bond with other segments (A) and (B) using the polyisocyanate compound (D') serving as a raw material for the segment (D) derived from a polyisocyanate compound, which will be described later, and production of the copolymer becomes easier.

The molecular weight of the polyethylene glycol (C') serving as a raw material for the segment (C) derived from a polyethylene glycol is not particularly limited. In one embodiment, the polyethylene glycol (C') preferably has a number-average molecular weight (Mn) of 200 to 20,000. The polyethylene glycol (C') may be one polyethylene glycol with the same average molecular weight used alone or may be two or more polyethylene glycols with different average molecular weights used in combination.

### - Proportion of Each Segment -

The proportion of the segment (A) derived from a butadiene-based polymer in the total amount of the segment (A) derived from a butadiene-based polymer, the segment (B) derived from a biodegradable polyester, and the segment (C) derived from a polyethylene glycol is preferably 20 to 80 mass%, and more preferably 20 to 60 mass%. When the proportion of the segment (A) derived from a butadiene-based polymer in the total amount of the segment (A) derived from a butadiene-based polymer, the segment (B) derived from a biodegradable polyester, and the segment (C) derived from a polyethylene glycol is 20 mass% or more, the copolymer has more preferable rubber elasticity and can be more suitably utilized as a tire material.

The proportion of the segment (B) derived from a biodegradable polyester in the total amount of the segment (A) derived from a butadiene-based polymer, the segment (B) derived from a biodegradable polyester, and the segment (C) derived from a polyethylene glycol is preferably 10 to 40 mass%, and more preferably 20 to 40 mass%. When the proportion of the segment (B) derived from a biodegradable polyester in the total amount of the segment (A) derived from a butadiene-based polymer, the segment (B) derived from a biodegradable polyester, and the segment (C) derived from a polyethylene glycol is 10 mass% or more, the decomposable portion in the copolymer increases, making it more easily decomposable.

The proportion of the segment (C) derived from a polyethylene glycol in the total amount of the segment (A) derived from a butadiene-based polymer, the segment (B) derived from a biodegradable polyester, and the segment (C) derived from a polyethylene glycol is preferably 10 to 40 mass%, and more preferably 20 to 40 mass%. When the proportion of the segment (C) derived from a polyethylene glycol in the total amount of the segment (A) derived from a butadiene-based polymer, the segment (B) derived from a biodegradable polyester, and the segment (C) derived from a polyethylene glycol is 10 mass% or more, the hydrophilicity of the copolymer is improved, water more easily reaches the segment (B) derived from a biodegradable polyester, and the copolymer becomes more easily decomposable.

In the copolymer of the present embodiment, it is preferable that, in the total amount of the segment (A) derived from a butadiene-based polymer, the segment (B) derived from a biodegradable polyester, and the segment (C) derived from a polyethylene glycol, the proportion of the segment (A) derived from a butadiene-based polymer is 20 to 80 mass%, the proportion of the segment (B) derived from a biodegradable polyester is 10 to 40 mass%, and the proportion of the segment (C) derived from a polyethylene glycol is 10 to 40 mass%. In this case, the copolymer can be more suitably utilized as a tire material and becomes more easily decomposable.

In the copolymer of the present embodiment, it is more preferable that, in the total amount of the segment (A) derived from a butadiene-based polymer, the segment (B) derived from a biodegradable polyester, and the segment (C) derived from a polyethylene glycol, the proportion of the segment (A) derived from a butadiene-based polymer is 20 to 60 mass%, the proportion of the segment (B) derived from a biodegradable polyester is 20 to 40 mass%, and the proportion of the segment (C) derived from a polyethylene glycol is 20 to 40 mass%. In this case, the copolymer can be even more suitably utilized as a tire material and becomes even more easily decomposable.

### - Segment (D) Derived from Polyisocyanate Compound -

The copolymer of the present embodiment contains a segment (D) derived from a polyisocyanate compound. The polyisocyanate compound (D') serving as a raw material for the segment (D) derived from a polyisocyanate compound is a compound having a plurality of isocyanate groups (NCO). The polyisocyanate compound (D') preferably has two isocyanate groups (NCO), that is, is preferably a diisocyanate compound. When the polyisocyanate compound (D') is a diisocyanate compound, the copolymer becomes a linear polymer without branching and has more preferable physical properties as a tire material.

Examples of the polyisocyanate compound (D') serving as a raw material for the segment (D) derived from a polyisocyanate compound include 1,3-bis(isocyanatomethyl)cyclohexane (1,3-HXDI), isophorone diisocyanate (IPDI), tolylene diisocyanate (TDI), diphenylmethane diisocyanate (MDI), crude diphenylmethane diisocyanate (crude MDI), hydrogenated diphenylmethane diisocyanate, hydrogenated tolylene diisocyanate, hexamethylene diisocyanate (HDI), and nurate-modified hexamethylene diisocyanate. These polyisocyanate compounds (D') may be used alone or in combination of two or more.

The amount of the polyisocyanate compound (D') serving as a raw material for the segment (D) derived from a polyisocyanate compound is preferably appropriately set so that the molar ratio (NCO/OH) of isocyanate groups (NCO) to hydroxy groups (OH) in the raw materials, which will be described later, falls within a desired range. In one embodiment, the proportion of the segment (D) derived from a polyisocyanate compound in the copolymer is preferably 16 to 50 mass%.

### - Segment (E) Derived from Diol Compound Having Molecular Weight of 600 or Less -

The copolymer of the present embodiment preferably further contains a segment (E) derived from a diol compound having a molecular weight of 600 or less, other than the segment (A) derived from a butadiene-based polymer, the segment (B) derived from a biodegradable polyester, the segment (C) derived from a polyethylene glycol, and the segment (D) derived from a polyisocyanate compound. A diol compound (E') having a molecular weight of 600 or less, serving as a raw material for the segment (E) derived from a diol compound having a molecular weight of 600 or less, acts as a chain extender, lengthens the chain of the copolymer, and can impart more preferable physical properties to the copolymer as a tire material. Therefore, a copolymer containing a segment (E) derived from a diol compound having a molecular weight of 600 or less has more preferable physical properties as a tire material.

Examples of the diol compound (E') having a molecular weight of 600 or less, serving as a raw material for the segment (E) derived from a diol compound having a molecular weight of 600 or less, include propylene glycol (also referred to as "propan-1,2-diol"), 1,3-propanediol, 1,4-butanediol, 1,5-pentanediol, 1,6-hexanediol, 1,8-octanediol, and the like, among which 1,4-butanediol is preferred. These diol compounds (E') having a molecular weight of 600 or less may be used alone or in combination of two or more.

The proportion of the segment (E) derived from a diol compound having a molecular weight of 600 or less in the copolymer is preferably 2 to 20 mass%, and more preferably 3 to 10 mass%. When the proportion of the segment (E) derived from a diol compound having a molecular weight of 600 or less is 2 mass% or more, the chain length of the copolymer becomes longer, and the copolymer has more preferable physical properties as a tire material. Further, when the proportion of the segment (E) derived from a diol compound having a molecular weight of 600 or less is 20 mass% or less, the copolymer has more preferable physical properties as a tire material.

### - Molar Ratio of "NCO" to "OH" in Raw Materials -

The molar ratio (NCO/OH) of isocyanate groups (NCO) to hydroxy groups (OH) in the raw materials of the copolymer of the present embodiment is preferably not less than 0.8 and less than 1.0, and more preferably not less than 0.9 and less than 1.0. When the molar ratio (NCO/OH) of isocyanate groups (NCO) to hydroxy groups (OH) in the raw materials is 0.8 or more, the chain length of the copolymer becomes longer, the molecular weight of the copolymer increases, and the copolymer has more preferable physical properties as a tire material. Further, when the molar ratio (NCO/OH) of isocyanate groups (NCO) to hydroxy groups (OH) in the raw materials is less than 1.0, the copolymer has hydroxy groups (OH) at the terminals, the chain length does not become excessively long, and the copolymer has a molecular weight that is easy to handle. Therefore, a copolymer in which the molar ratio (NCO/OH) of isocyanate groups (NCO) to hydroxy groups (OH) in the raw materials is not less than 0.8 and less than 1.0 has more preferable physical properties as a tire material and is also easy to handle.

### -Soft Segment (SS) and Hard Segment (HS)-

In the copolymer containing a segment (E) derived from a diol compound having a molecular weight of 600 or less, the segment (A) derived from a butadiene-based polymer, the segment (B) derived from a biodegradable polyester, and the segment (C) derived from a polyethylene glycol function as a soft segment (SS) of the copolymer.

On the other hand, the segment (D) derived from a polyisocyanate compound and the segment (E) derived from a diol compound having a molecular weight of 600 or less function as a hard segment (HS) of the copolymer.

Here, the mass ratio (SS:HS) of the soft segment (SS) composed of the segment (A) derived from a butadiene-based polymer, the segment (B) derived from a biodegradable polyester, and the segment (C) derived from a polyethylene glycol, to the hard segment (HS) composed of the segment (D) derived from a polyisocyanate compound and the segment (E) derived from a diol compound having a molecular weight of 600 or less, is preferably from 80:20 to 50:50. When the proportion of the soft segment (SS) in the total of the soft segment (SS) and the hard segment (HS) is 50 mass% or more, and the proportion of the hard segment (HS) is 50 mass% or less, the copolymer exhibits more preferable physical properties as a tire material. Further, when the proportion of the soft segment (SS) in the total of the soft segment (SS) and the hard segment (HS) is 80 mass% or less, and the proportion of the hard segment (HS) is 20 mass% or more, the chain length of the copolymer becomes longer, and the copolymer exhibits more preferable physical properties as a tire material. Therefore, a copolymer in which the mass ratio (SS:HS) of the soft segment (SS) to the hard segment (HS) is from 80:20 to 50:50 has more preferable physical properties as a tire material.

### -Molecular Weight of Copolymer-

The copolymer of the present embodiment is not particularly limited, but it is preferable that the number-average molecular weight (Mn) is from 10,000 to 2,000,000, and more preferably from 20,000 to 1,000,000. When the number-average molecular weight (Mn) is 10,000 or more, the copolymer can be more suitably used as a tire material, and when the number-average molecular weight (Mn) is 2,000,000 or less, the copolymer is easier to knead with various compounding agents for tires.

The copolymer of the present embodiment is not particularly limited, but it is preferable that the weight-average molecular weight (Mw) is from 20,000 to 4,000,000, and more preferably from 40,000 to 2,000,000. When the weight-average molecular weight (Mw) is 20,000 or more, the copolymer can be more suitably used as a tire material, and when the weight-average molecular weight (Mw) is 4,000,000 or less, the copolymer is easier to knead with various compounding agents for tires.

It should be noted that, in the present specification, the number-average molecular weight (Mn) and the weight-average molecular weight (Mw) of the copolymer and the raw materials of each segment are determined by gel permeation chromatography (GPC) using polystyrene as a standard substance.

### -Applications of Copolymer-

The copolymer of the present embodiment can be used in various rubber products. Among them, the copolymer of the present embodiment is suitable as a tire material.

When the copolymer of the present embodiment is used in tires, the copolymer can be mixed with various compounding agents to form a rubber composition according to the intended performance. Further, if desired, the copolymer may be blended with other rubber components.

As described above, since the copolymer of the present embodiment is easily decomposable, a rubber composition containing the copolymer of the present embodiment and the other rubber components and compounding agents is also easily decomposable.

In addition, a tire produced from such a rubber composition can be easily decomposed and reused after use.

### -Decomposition of Copolymer-

It is preferable that the copolymer of the present embodiment is biodegradable, that is, it is preferable that it can be decomposed in the natural environment.

The copolymer of the present embodiment may, if desired, be decomposed (hydrolyzed) in the presence of an alkali or acid to accelerate decomposition. Examples of the alkali include sodium hydroxide, potassium hydroxide, and the like. Examples of the acid include inorganic acids such as hydrochloric acid, sulfuric acid, and nitric acid, and organic acids such as formic acid, acetic acid, and propionic acid.

The material obtained by decomposing the copolymer of the present embodiment can be reused for various applications; for example, it can be used as a raw material for producing the copolymer, or as a raw material for synthesizing other chemical substances.

### <Method for Producing Copolymer>

The copolymer of the present embodiment can be produced by reacting a butadiene-based polymer (A'), a biodegradable polyester (B'), a polyethylene glycol (C'), and a polyisocyanate compound (D'), which serve as raw materials for the above-described segments (A), (B), (C), and (D).

Further, when the copolymer has a segment (E) derived from a diol compound having a molecular weight of 600 or less, the copolymer can be produced by reacting the butadiene-based polymer (A'), the biodegradable polyester (B'), the polyethylene glycol (C'), the polyisocyanate compound (D'), and the diol compound (E') having a molecular weight of 600 or less.

Here, a copolymer having a segment (E) derived from a diol compound having a molecular weight of 600 or less is preferably produced through:
(First Step) a step of reacting the butadiene-based polymer (A'), the biodegradable polyester (B'), the polyethylene glycol (C'), and the polyisocyanate compound (D') to form a soft segment (SS) containing portion; and
(Second Step) a step of reacting the diol compound (E') having a molecular weight of 600 or less with the soft segment (SS) containing portion to produce a copolymer.

In this case, a copolymer having the desired physical properties can be more easily obtained.

In the first step, it is preferable that the number of isocyanate groups (NCO) contained in the polyisocyanate compound (D') is greater than the number of hydroxy groups (OH) contained in the butadiene-based polymer (A'), the biodegradable polyester (B'), and the polyethylene glycol (C'), that is, isocyanate groups (NCO) are in excess, and a soft segment (SS) containing portion having an isocyanate group (NCO) at the terminal is preferably formed. The soft segment (SS) containing portion having an isocyanate group (NCO) at the terminal can easily undergo a urethanization reaction with the diol compound (E') having a molecular weight of 600 or less in the second step, and a copolymer having the desired physical properties can be obtained even more easily.

### -Catalyst-

In one embodiment of the production of the copolymer, since a urethanization reaction is utilized, it is preferable to use a urethanization reaction catalyst. Examples of such urethanization reaction catalysts include: organic tin compounds such as dibutyltin dilaurate, dibutyltin diacetate, dibutyltin dimaleate, and octenoic acid tin; organolead compounds such as octenoic acid lead; monoamines such as triethylamine and dimethylcyclohexylamine; diamines such as tetramethylethylenediamine, tetramethylpropanediamine, and tetramethylhexanediamine; triamines such as pentamethyldiethylenetriamine, pentamethyldipropylenetriamine, and tetramethylguanidine; cyclic amines such as triethylenediamine, dimethylpiperazine, methylethylpiperazine, methylmorpholine, dimethylaminoethylmorpholine, and dimethylimidazole; alkanolamines such as dimethylaminoethanol, dimethylaminoethoxyethanol, trimethylaminoethylethanolamine, methylhydroxyethylpiperazine, and hydroxyethylmorpholine; and ether amines such as bis(dimethylaminoethyl) ether and ethylene glycol bis(dimethyl)aminopropyl ether. Among these catalysts, organic tin compounds are preferable. These catalysts may be used alone or in combination of two or more kinds. The amount of the catalyst used is preferably in the range of 0.0001 to 0.1 mol per 1 mol of the polyisocyanate compound (D').

### -Solvent-

It is preferable to carry out the production of the copolymer in a solvent. As the solvent, a solvent that does not inhibit the urethanization reaction is preferable, and a solvent that does not have active hydrogen is preferable. Further, it is preferable to dehydrate the solvent prior to the reaction.

Examples of the solvent include ether-based solvents such as tetrahydrofuran, methyl tetrahydrofuran, 1,3-dioxane, 1,4-dioxane, 1,3-dioxolane, diethyl ether, dipropyl ether, diisopropyl ether, dibutyl ether, dipentyl ether, dihexyl ether, diheptyl ether, dioctyl ether, t-butyl methyl ether, and cyclopentyl methyl ether. These solvents may be used alone or in combination of two or more kinds.

### -Reaction Conditions-

The reaction temperature in the production of the copolymer is not particularly limited, and may be, for example, 50°C to 100°C. The reaction time is also not particularly limited and can be appropriately set according to the reaction temperature. For example, the reaction time is preferably about 10 minutes to 3 hours. Also, even in the case where the copolymer is produced through the first step and the second step, the reaction temperature and reaction time can be appropriately set, and in one embodiment, it is preferable to carry out the reaction at 50°C to 100°C for about 10 minutes to 3 hours.

### EXAMPLES

The present disclosure will be described in more detail below with reference to examples, but the present disclosure is not limited to the following examples in any way.

### <Raw Materials Used for Synthesis of (Co)polymer>

Polybutadiene diol: Krasol LBH 3000, manufactured by Cray Valley, number-average molecular weight (Mn) = about 3,000
Polycaprolactone: Polycaprolactone diol, manufactured by Sigma-Aldrich, number-average molecular weight (Mn) = about 2,000, CAS: 36890-68-3
Polyethylene glycol: Manufactured by FUJIFILM Wako Pure Chemical Industries, Ltd., number-average molecular weight (Mn) = about 1,000, Wako first grade, CAS: 25322-68-3
1,3-Bis(isocyanatomethyl)cyclohexane: Manufactured by Tokyo Chemical Industry Co., Ltd. (TCI), cis/trans mixture, CAS: 38661-72-2
Dibutyltin dilaurate: Manufactured by Tokyo Chemical Industry Co., Ltd. (TCI), CAS: 77-58-7
Solvent: Tetrahydrofuran (dehydrated, no stabilizer added), manufactured by Kanto Chemical Co., Inc., CAS: 109-99-9
1,4-Butanediol: Manufactured by Tokyo Chemical Industry Co., Ltd. (TCI), CAS: 110-63-4

### (Example 1)

To a dried and nitrogen-purged reactor, polybutadiene diol (11.230 g, 3.556 mmol), polyethylene glycol (11.023 g, 11.023 mmol), and polycaprolactone (9.387 g, 4.693 mmol) were added. After dissolving these in tetrahydrofuran (THF) (80 g) to form a homogeneous solution, 1,3-bis(isocyanatomethyl)cyclohexane (7.597 g, 39.114 mmol) was added to form a single solution. Dibutyltin dilaurate (tin-based catalyst) (0.06 g, 0.095 mmol) was added to the reactor to initiate the reaction. The reaction was carried out at 80°C for 1.5 hours to ensure complete conversion. After this initial step, 1,4-butanediol (BDO) (1.843 g, 20.446 mmol) dissolved in THF (20 mL) was injected into the reaction mixture. After continuing the reaction at 80°C for a further 2 hours, methanol (5 mL) was added to quench the reaction. Volatiles were removed in a well-ventilated fume hood, and the resulting copolymer was washed with methanol and vacuum-dried at 60°C until the weight became constant.

### (Example 2)

To a dried and nitrogen-purged reactor, polybutadiene diol (20.5 g, 6.491 mmol), polyethylene glycol (10.39 g, 10.390 mmol), and polycaprolactone (10.39 g, 5.193 mmol) were added. After dissolving these in tetrahydrofuran (THF) (80 g) to form a homogeneous solution, 1,3-bis(isocyanatomethyl)cyclohexane (9.078 g, 46.738 mmol) was added to form a single solution. Dibutyltin dilaurate (tin-based catalyst) (0.060 g, 0.095 mmol) was added to the reactor to initiate the reaction. The reaction was carried out at 80°C for 2.0 hours to ensure complete conversion. After this initial step, 1,4-butanediol (BDO) (2.281 g, 25.316 mmol) dissolved in THF (20 mL) was injected into the reaction mixture. After continuing the reaction at 80°C for a further 2 hours, methanol (5 mL) was added to quench the reaction. Volatiles were removed in a well-ventilated fume hood, and the resulting copolymer was washed with methanol and vacuum-dried at 60°C until the weight became constant.

### (Example 3)

To a dried and nitrogen-purged reactor, polybutadiene diol (20.5 g, 6.491 mmol), polyethylene glycol (10.39 g, 10.390 mmol), and polycaprolactone (10.39 g, 5.193 mmol) were added. After dissolving these in tetrahydrofuran (THF) (80 g) to form a homogeneous solution, 1,3-bis(isocyanatomethyl)cyclohexane (12.608 g, 64.913 mmol) was added to form a single solution. Dibutyltin dilaurate (tin-based catalyst) (0.060 g, 0.095 mmol) was added to the reactor to initiate the reaction. The reaction was carried out at 80°C for 2.0 hours to ensure complete conversion. After this initial step, 1,4-butanediol (BDO) (3.919 g, 43.492 mmol) dissolved in THF (20 mL) was injected into the reaction mixture. After continuing the reaction at 80°C for a further 2 hours, methanol (5 mL) was added to quench the reaction. Volatiles were removed in a well-ventilated fume hood, and the resulting copolymer was washed with methanol and vacuum-dried at 60°C until the weight became constant.

### (Comparative Example 1)

To a dried and nitrogen-purged reactor, polyethylene glycol (0.362 g, 0.362 mmol) and polycaprolactone (4.82 g, 2.41 mmol) were added. After dissolving these in tetrahydrofuran (THF) (10 g) to form a homogeneous solution, 1,3-bis(isocyanatomethyl)cyclohexane (1.03 g, 5.302 mmol) was added to form a single solution. Dibutyltin dilaurate (tin-based catalyst) (0.02 g, 0.032 mmol) was added to the reactor to initiate the reaction. The reaction was carried out at 80°C for 1.5 hours to ensure complete conversion. After this initial step, 1,4-butanediol (BDO) (0.239 g, 2.651 mmol) dissolved in THF (5 mL) was injected into the reaction mixture. After continuing the reaction at 80°C for a further 2 hours, methanol (5 mL) was added to quench the reaction. Volatiles were removed in a well-ventilated fume hood, and the resulting copolymer was washed with methanol and vacuum-dried at 60°C until the weight became constant.

### (Comparative Example 2)

Polycaprolactone (polycaprolactone diol, Mn: about 10,000, CAS: 36890-68-3) manufactured by Sigma-Aldrich was used.

### (Comparative Example 3)

To a dried and nitrogen-purged reactor, polybutadiene diol (40.759 g, 12.906 mmol) was added. After dissolving this in tetrahydrofuran (THF) (100 g) to form a homogeneous solution, 1,3-bis(isocyanatomethyl)cyclohexane (9.526 g, 49.044 mmol) was added to form a single solution. Dibutyltin dilaurate (tin-based catalyst) (0.100 g, 0.158 mmol) was added to the reactor to initiate the reaction. The reaction was carried out at 80°C for 80 minutes to ensure complete conversion. After this initial step, 1,4-butanediol (BDO) (3.257 g, 36.138 mmol) dissolved in THF (20 mL) was injected into the reaction mixture. After continuing the reaction at 80°C for a further 2 hours, methanol (5 mL) was added to quench the reaction. Volatiles were removed in a well-ventilated fume hood, and the resulting polymer was washed with methanol and vacuum-dried at 60°C until the weight became constant.

### (Comparative Example 4)

Polycaprolactone (polycaprolactone diol, Mn: about 2,000, CAS: 36890-68-3) manufactured by Sigma-Aldrich was used.

### (Comparative Example 5)

To a dried and nitrogen-purged reactor, polyethylene glycol (13.725 g, 13.725 mmol) and polycaprolactone (3.0 g, 1.5 mmol) were added. After dissolving these in tetrahydrofuran (THF) (20 g) to form a homogeneous solution, 1,3-bis(isocyanatomethyl)cyclohexane (5.929 g, 30.525 mmol) was added to form a single solution. Dibutyltin dilaurate (tin-based catalyst) (0.03 g, 0.048 mmol) was added to the reactor to initiate the reaction. The reaction was carried out at 80°C for 1.5 hours to ensure complete conversion. After this initial step, 1,4-butanediol (BDO) (1.379 g, 15.3 mmol) dissolved in THF (5 mL) was injected into the reaction mixture. After continuing the reaction at 80°C for a further 2 hours, methanol (5 mL) was added to quench the reaction. Volatiles were removed in a well-ventilated fume hood, and the resulting copolymer was washed with methanol and vacuum-dried at 60°C until the weight became constant.

### <Analysis Method for Molecular Weight of (Co)polymer>

The number-average molecular weight (Mn), weight-average molecular weight (Mw), peak top molecular weight (Mp), and polydispersity (PDI = Mw/Mn) of the (co)polymer were determined by gel permeation chromatography [GPC: HLC-8321GPC/HT manufactured by Tosoh Corporation, column: HT-806M × 2 manufactured by Showa Denko K.K., detector: differential refractometer (RI)] using monodisperse polystyrene as a standard. The measurement temperature was 40°C.

### <Analysis Method for Glass Transition Temperature (Tg1) of (Co)polymer>

The glass transition temperature (Tg1) of the (co)polymer was measured using a differential scanning calorimeter (DSC).

### <Analysis Method for Each Segment of (Co)polymer>

The proportion (mass%) of each segment in the (co)polymer was determined from the integration ratio of each peak in the ¹H-NMR spectrum. In Table 1, the proportion of each segment in the total of the segments derived from polybutadiene diol, polycaprolactone, and polyethylene glycol in the resulting (co)polymer is indicated.

### <Evaluation of Degradability of (Co)polymer>

The (co)polymer was immersed in alkaline water adjusted to pH 14 with an aqueous NaOH solution, and a decomposition reaction was carried out at room temperature for 11 days and was classified according to the following evaluation criteria.
A: Fast hydrolysis rate and complete decomposition of (co)polymer
B: Moderate hydrolysis rate and partial decomposition of (co)polymer
C: Slow hydrolysis rate and almost no decomposition of (co)polymer

**[Table 1]**

| | | Comparative Example 1 | Comparative Example 2 | Comparative Example 3 | Comparative Example 4 | Comparative Example 5 | Example 1 | Example 2 | Example 3 |
|---|---|---|---|---|---|---|---|---|---|
| Number-average molecular weight (Mn) of each raw material | Polybutadiene diol | - | - | 3000 | - | - | 3000 | 3000 | 3000 |
| | Polycaprolactone | 2000 | 10000 | - | 2000 | 2000 | 2000 | 2000 | 2000 |
| | Polyethylene glycol | 1000 | - | - | - | 1000 | 1000 | 1000 | 1000 |
| Raw material composition ratio (molar ratio) | Polybutadiene diol | - | - | 1.00 | - | - | 1.00 | 1.00 | 1.00 |
| | Polycaprolactone | 1.00 | 1.00 | - | 1.00 | 1.00 | 1.32 | 0.80 | 0.80 |
| | Polyethylene glycol | 0.15 | - | - | - | 9.15 | 3.13 | 1.60 | 1.60 |
| | 1,3-Bis(isocyanatomethyl) cyclohexane | 2 | - | 3.8 | - | 20 | 11.0 | 7.2 | 10.0 |
| | 1,4-Butanediol | 1 | - | 2.8 | - | 10 | 5.8 | 3.9 | 6.7 |
| NCO/OH (molar ratio) | NCO index | 1 | - | 1 | - | 1 | 0.98 | 0.99 | 0.99 |
| Soft segment:Hard segment | SS:HS (mass ratio) | 74.2:25.8 | - | 76.1:23.9 | - | 75.0:25.0 | 77.1:22.9 | 78.4:21.6 | 71.4:28.6 |
| Yield | g | 6 | - | 53 | - | 24 | 37 | 49 | 45 |
| Analytical values of product | Number-average molecular weight (Mn) (×10³) | 20 | 8 | 64 | 3 | 5 | 27 | 60 | 35 |
| | Weight-average molecular weight (Mw) (×10³) | 34 | 13 | 249 | 5 | 12 | 55 | 107 | 72 |
| | Peak top molecular weight (Mp) (×10³) | 33 | 13 | 170 | 4 | 12 | 49 | 91 | 56 |
| | Polydispersity (PDI) | 1.71 | 1.58 | 3.9 | 1.67 | 2.22 | 2.0 | 1.8 | 2.1 |
| | Glass transition temperature (Tg1, °C) | -57 | -63 | -35 | -65 | -50 | -44 | -39 | -36 |
| Proportion (mass%) of each segment in total of polybutadiene diol-derived segment, polycaprolactone-derived segment, and polyethylene glycol-derived segment in product | Polybutadiene diol-derived segment | 0% | 0% | 100% | 0% | 0% | 34% | 49% | 53% |
| | Polycaprolactone-derived segment | 93% | 100% | 0% | 100% | 20% | 31% | 25% | 24% |
| | Polyethylene glycol-derived segment | 7% | 0% | 0% | 0% | 80% | 35% | 26% | 23% |
| Proportion (mass%) of each raw material in total of polybutadiene diol, polycaprolactone, and polyethylene glycol in raw materials | Proportion of polybutadiene diol | 0% | 0% | 100% | 0% | 0% | 35% | 50% | 50% |
| | Proportion of polycaprolactone | 93% | 100% | 0% | 100% | 18% | 30% | 25% | 25% |
| | Proportion of polyethylene glycol | 7% | 0% | 0% | 0% | 82% | 35% | 25% | 25% |
| Evaluation | Degradability (hydrolysis rate) | C | C | C | A | A | A | A | B |

From Table 1, it can be seen that the copolymers of the examples according to the present disclosure contain a segment (A) derived from a butadiene-based polymer, can be utilized as tire materials, and are easily decomposable.

### INDUSTRIAL APPLICABILITY

The copolymer of the present disclosure can be used as a tire material.

## Claims

1. A copolymer comprising: a segment (A) derived from a butadiene-based polymer; a segment (B) derived from a biodegradable polyester; a segment (C) derived from a polyethylene glycol; and a segment (D) derived from a polyisocyanate compound.

2. The copolymer according to claim 1, further comprising a segment (E) derived from a diol compound having a molecular weight of 600 or less, other than the segment (A) derived from a butadiene-based polymer, the segment (B) derived from a biodegradable polyester, the segment (C) derived from a polyethylene glycol, and the segment (D) derived from a polyisocyanate compound.

3. The copolymer according to claim 1, wherein, in a total amount of the segment (A) derived from a butadiene-based polymer, the segment (B) derived from a biodegradable polyester, and the segment (C) derived from a polyethylene glycol, a proportion of the segment (A) derived from a butadiene-based polymer is 20 mass% to 80 mass%, a proportion of the segment (B) derived from a biodegradable polyester is 10 mass% to 40 mass%, and a proportion of the segment (C) derived from a polyethylene glycol is 10 mass% to 40 mass%.

4. The copolymer according to claim 3, wherein, in the total amount of the segment (A) derived from a butadiene-based polymer, the segment (B) derived from a biodegradable polyester, and the segment (C) derived from a polyethylene glycol, the proportion of the segment (A) derived from a butadiene-based polymer is 20 mass% to 60 mass%, the proportion of the segment (B) derived from a biodegradable polyester is 20 mass% to 40 mass%, and the proportion of the segment (C) derived from a polyethylene glycol is 20 mass% to 40 mass%.

5. The copolymer according to claim 1 or 2, wherein a molar ratio (NCO/OH) of isocyanate groups (NCO) to hydroxy groups (OH) in raw materials of the copolymer is not less than 0.8 and less than 1.0.

6. The copolymer according to claim 2, wherein a mass ratio (SS:HS) of a soft segment (SS) comprising the segment (A) derived from a butadiene-based polymer, the segment (B) derived from a biodegradable polyester, and the segment (C) derived from a polyethylene glycol, to a hard segment (HS) comprising the segment (D) derived from a polyisocyanate compound and the segment (E) derived from a diol compound having a molecular weight of 600 or less, is from 80:20 to 50:50.

7. The copolymer according to claim 1, wherein a number-average molecular weight (Mn) of a butadiene-based polymer (A') serving as a raw material for the segment (A) derived from a butadiene-based polymer is from 1,000 to 30,000.

8. A method for producing the copolymer according to claim 2, comprising:
a step of reacting a butadiene-based polymer (A'), a biodegradable polyester (B'), a polyethylene glycol (C'), and a polyisocyanate compound (D') to form a soft segment (SS) containing portion; and
a step of reacting a diol compound (E') having a molecular weight of 600 or less, other than the butadiene-based polymer (A'), the biodegradable polyester (B'), the polyethylene glycol (C'), and the polyisocyanate compound (D'), with the soft segment (SS) containing portion to produce a copolymer.
